# EUROPÄISCHE PATENTSCHRIFT

(11) **EP 2 832 203 B1**
(45) Veröffentlichungstag und Bekanntmachung des Hinweises auf die Patenterteilung: **08.06.2016**
(21) Anmeldenummer: 14401084.0
(22) Anmeldetag: 29.07.2014
(51) Int. Cl.: A01C 7/12

(54) **Sämaschine**
Seeder
Semoir

(30) Priorität: 02.08.2013 DE 102013108340
(43) Veröffentlichungstag der Anmeldung: 04.02.2015
(73) Patentinhaber: Amazonen-Werke H. Dreyer GmbH & Co. KG, 49205 Hasbergen (DE)
(72) Erfinder: Brüggemann, Klaus, 27777 Ganderkesee (DE)

(56) Entgegenhaltungen:
- DE-A1- 4 445 313
- DE-A1- 10 155 395
- DE-U1- 8 811 286
- DE-U1- 9 113 968

## Beschreibung

Die Erfindung betrifft eine Sämaschine gemäß des Oberbegriffes des Patentanspruches 1.

Eine derartige Sämaschine wird in der DE 91 13 968 U1 beschrieben.

Eine weitere Sämaschine ist in der EP 1 430 761 B2 beschrieben. Diese Sämaschine ist zum Ausbringen von Saatgut, Dünger und dergleichen geeignet. Die Sämaschine weist einen Vorratsbehälter, Verteil- und/oder Ausbringeinrichtungen und eine zwischen dem Vorratsbehälter und den Verteil- und/oder Ausbringeinrichtungen angeordnete Dosiervorrichtung auf. Die Dosierräder sind als mehrere nebeneinander angeordnete und in Dosiergehäusen angeordnete als Normal- und/oder Feindosierräder ausgebildet. Die Dosierräder führen das in dem Vorratsbehälter befindliche Saatgut, Dünger und dergleichen in einstellbaren Mengen den Verteil- und/oder Ausbringeinrichtungen zu. Unterhalb der Dosierräder ist zumindest eine vorzugsweise einstellbare Bodenplatte, die den Dosierrädern zugeordnet ist, angeordnet ist.

Eine weitere Sämaschine ist in der DE 40 04 967 C2 beschrieben. Diese Sämaschine ist ebenfalls zum Ausbringen von Saatgut, Dünger und dergleichen vorgesehen. Die Sämaschine weist einem Vorratsbehälter, Verteil- und/oder Ausbringeinrichtungen und die zwischen dem Vorratsbehälter und den Verteil- und/oder Ausbringeinrichtungen angeordnete Dosiervorrichtung auf. Die Dosiervorrichtung weist mehrere nebeneinander angeordnete Dosiergehäuse mit darin angeordneten Dosierrädern auf. Die Dosierräder sind auf einer angetriebenen Dosierwelle angeordnet. Die Dosierräder führen das sich in dem Vorratsbehälter befindliche Material, wie Saatgut, Dünger und dergleichen in einstellbaren Mengen den Verteil- und/oder Ausbringeinrichtungen zu. Einige der als sogenannte Dosierstoppdosierräder ausgebildeten Dosierräder sind frei drehbar auf der Dosierwelle angeordnet und mittels zugeordneter Kuppelelemente einerseits mit einer Antriebseinrichtung verbindbar und antreibbar und andererseits von der Antriebseinrichtung abkuppel- und stillsetzbar sind, um die Materialzuführung aus dem Vorratsbehälter zu den Verteil- und/oder Ausbringeinrichtungen zu unterbrechen.

Die hier vorgeschlagene Lösung eignet sich nicht zur einfachen Nachrüstung.

Der Erfindung liegt die Aufgabe zu Grunde, in einfacher Weise eine Nachrüstung der Zu- und Abkuppelbarkeit der Dosierräder von der Antriebsvorrichtung zu ermöglichen.

Diese Aufgabe wird erfindungsgemäß durch die kennzeichnenden Merkmale des Anspruches 1 gelöst.

Infolge dieser Maßnahmen lässt sich aufgrund des seitlich aus dem Dosiergehäuse herausgeführten Bereiches des jeweiligen Kuppelelementes dieses sich über Verbindungs- und/oder Antriebsübertragungselemente in einfacher Weise mit der Antriebseinrichtung kraftschlüssig verbinden. Somit ist einfache Nachrüstung möglich.

Hierbei sind die Verbindungs- und/oder Antriebsübertragungselemente jeweils als Zahnrad, vorzugsweise Stirnrad ausgebildet sind.

Eine einfache Nachrüstung wird durch geteilte und zusammenklemmbare auf der Dosierwelle sowie festsetzbare Anordnung des Zahnrades erreicht.

Eine einfache Antriebsübertragung lässt sich dadurch erreichen, dass das jeweilige einem Dosierrad zugeordnete Zahnrad mit einem auf einer von der Antriebseinrichtung angetriebenen Vorgelegewelle angeordneten Antriebszahnrad in Antriebsverbindung steht.

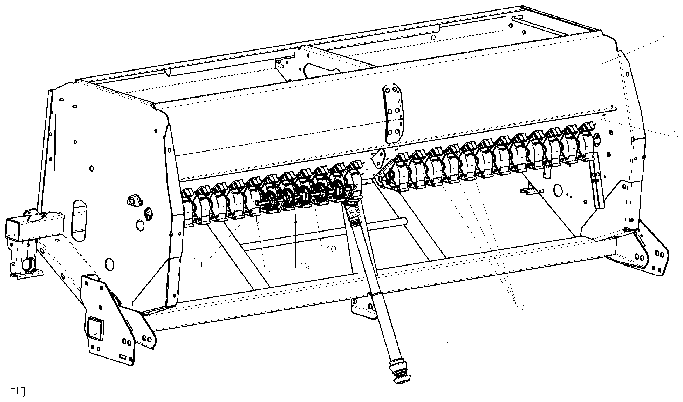

Weitere Einzelheiten der Erfindung sind der Beispielsbeschreibung zu entnehmen. Die Zeichnungen zeigen
- Fig.1: den Vorratsbehälter einer Sämaschine in Teilansicht, schematischer Darstellung sowie in perspektivischer Ansicht,
- Fig.2: die an dem Vorratsbehälter geordneten Dosiergehäuse mit Dosierorganen und zugeordneter Vorgelegewelle und Antriebsrädern ausschnittsweise und in perspektivischer Ansicht sowie in Teilansicht,
- Fig.3: ein an dem Vorratsbehälter geordnetes Dosiergehäuse mit Dosierorganen und zugeordneter Vorgelegewelle und Antriebsrädern in einer anderen perspektivischen Ansicht,
- Fig.4: ein an dem Vorratsbehälter geordnetes Dosiergehäuse mit Dosierorganen und zugeordneter Vorgelegewelle und Antriebsrädern in der Darstellungsweise nach Fig. 3, jedoch in einer anderen Einstellung der Absperrschieber zueinander,
- Fig.5: ein an dem Vorratsbehälter geordnetes Dosiergehäuse mit Dosierorganen und zugeordneter Vorgelegewelle und Antriebsrädern in der Ansicht von unten,
- Fig.6: ein an dem Vorratsbehälter geordnetes Dosiergehäuse mit Dosierorganen und zugeordneter Vorgelegewelle und Antriebsrädern in einer anderen perspektivischen Ansicht,
- Fig.7: das an dem Vorratsbehälter anzuordnende Dosiergehäuse mit Dosierorgan mit zugeordneten Absperrschiebern in einer anderen perspektivischen Ansicht und in Explosionsdarstellung und

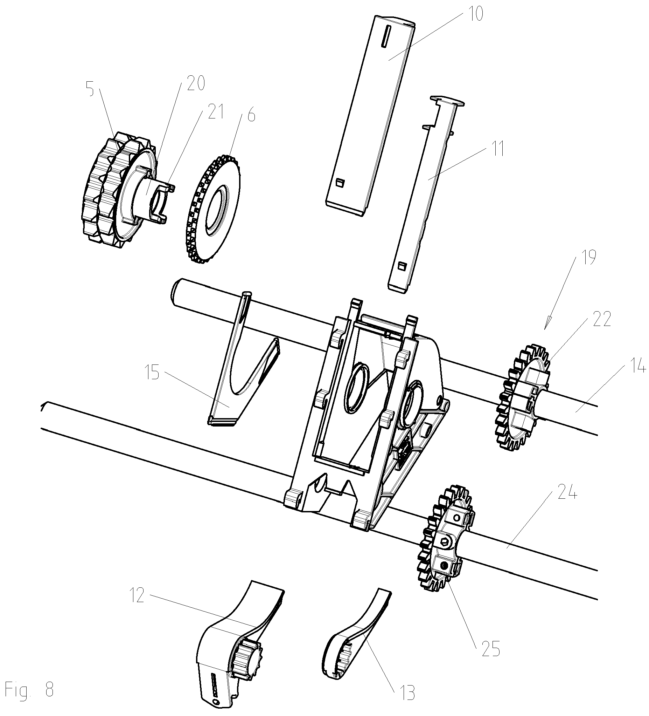

- Fig.8: das an dem Vorratsbehälter anzuordnende Dosiergehäuse mit Dosierorgan mit zugeordneten Absperrschiebern in einer anderen perspektivischen Ansicht und in weiteren Explosionsdarstellung.

Die Sämaschine ist zum Ausbringen von Saatgut, Dünger und dergleichen geeignet. Von der Sämaschine sind lediglich der Vorratsbehälter 1, der zur Aufnahme des auszubringenden Materiales dient, die Dosiervorrichtung 2 und eine der Saatgutleitungen 3, die zu den als Säscharen ausgebildeten Verteil- und/oder Ausbringeinrichtungen führt, dargestellt. Die Dosiervorrichtung 2 ist zwischen dem Vorratsbehälter 1 und den Verteil- und/oder Ausbringeinrichtungen angeordnet. Die Dosiervorrichtung 2 weist mehrere nebeneinander angeordnete Dosiergehäuse 4 auf, in denen als Normal- 5 und Feinsäräder 6 ausgebildete Dosierräder angeordnet sind. Mittels der Dosierräder 5, 6 wird das in dem Vorratsbehälter 1 befindliche Saatgut, Dünger und dergleichen in einstellbaren Mengen den Verteil- und/oder Ausbringeinrichtungen zugeführt.

Die Dosiergehäuse 4 sind mittels der auf der Montageseite 7 des Dosiergehäuses 4 angeordneten Befestigungshaken 8 in bekannter Weise an der hinteren Seitenwand 9 des Vorratsbehälters 1 angeordnet. In diesem Bereich, in dem die Dosiergehäuse 4 angeordnet sind, sind Durchbrüche in der Seitenwand 9 des Vorratsbehälters 1 angeordnet, damit das sich im Vorratsbehälter 1 befindliche Material zu den in dem Dosiergehäuse 4 angeordneten Dosierrädern 5, 6 gelangen kann. Zwischen dem Vorratsbehälter 1 und den Dosierrädern 5, 6 sind dem Dosiergehäuse 4 die beiden Absperrschieber 10, 11, die unabhängig voneinander verschiebbar sind, angeordnet. Somit ist jedem Dosierrad 5, 6 ein eigener entsprechender Absperrschieber 10, 11 zugeordnet. Weiterhin sind unterhalb der Dosierräder 5, 6 in dem Dosiergehäuse 4 die vorzugsweise einstellbaren Bodenplatten 12, 13 die den Dosierrädern 5, 6 zugeordnet sind, angeordnet ist.

Des jeweiligen Normaldosierrades 5 und das jeweilige Feindosierrad 6 sind kraftschlüssig auf einer nicht dargestellten und rotierend angetriebenen Dosierwelle 14 angeordnet.

Zwischen den in einem Dosiergehäuse 4 angeordneten Normal- 5 und Feindosierrad 6 ist eine an dem Dosiergehäuse 4 angeordnete Zwischenwand 15 angeordnet, die sich über die gesamte Ausdehnung des jeweiligen Normal- 5 und Feindosierrades 6 erstreckt. Die den in einem Dosiergehäuse 4 angeordnete Bodenplatte ist zweigeteilt ausgebildet, so dass die eine Bodenplatte 12 den Normaldosierrad 5 und die andere Bodenplatte 13 dem Feindosierrad 6 zugeordnet ist. Die jeweilige Bodenplatte 12, 13 weist eine an die jeweilige Breite des zugeordneten Dosierrades 5, 6 angepasste Breite auf. Zwischen den beiden Bodenplatten 12, 13 befindet sich ein derartiger Abstand 16, der zumindest annähernd der Dicke 17 der jeweiligen Zwischenwand 15 entspricht. In bevorzugter Weise ist der Abstand 16 zwischen den beiden Bodenplatten 12, 13 etwas größer als die Dicke 17 der jeweiligen Zwischenwand 15.

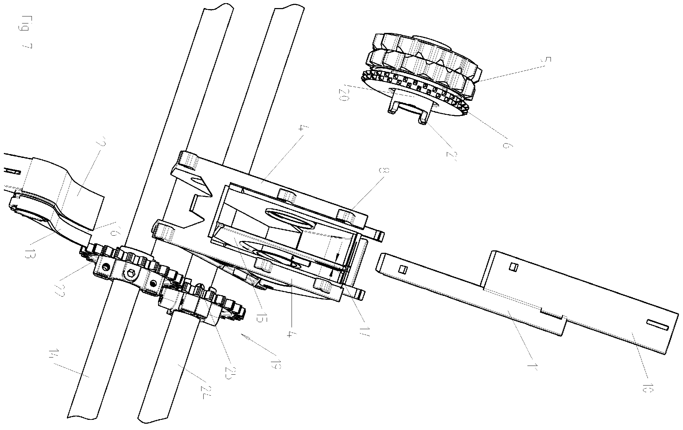

Die Zwischenwand 15 ist in löst- und herausnehmbare Weise an dem Gehäuse 4 angeordnet, wie die Fig.7 zeigt.

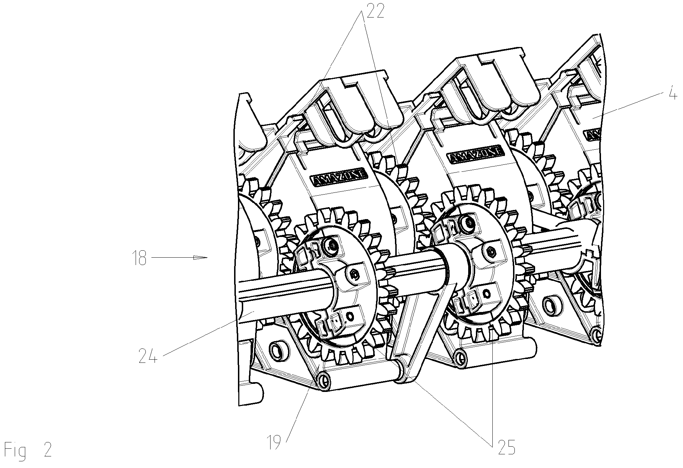

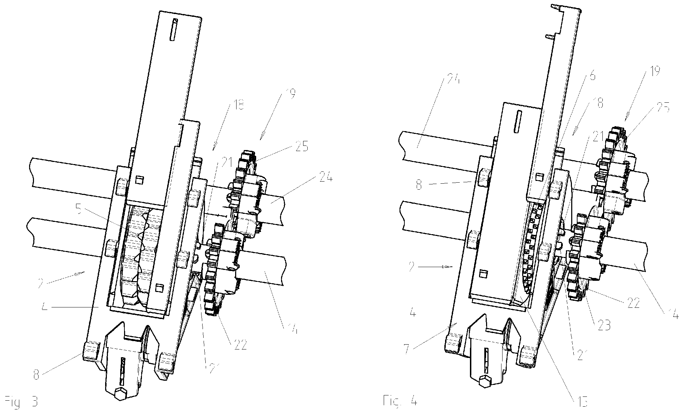

Durch die zwischen dem Normaldosierrad 5 und in dem Feindosierrad 6 angeordnete Zwischenplatte 15, die bis an die Rückseite der Absperrschieber 10, 11 heranreicht, wie Fig.2 zeigt, findet eine vollständige Abgrenzung zwischen diesen beiden Dosierrädern 5, 6 statt, so dass, wenn der jeweilige Absperrschieber 12, 13 nach unten geschoben ist, entweder das Normaldosierrad 5 oder das Feindosierrad 6 von der Materialzuführung aus dem Vorratsbehälter 1 abgesperrt ist. Gemäß der Einstellung der Absperrschieber 10, 11 nach Fig.2 ist das Feindosierrad 6 durch den schmalen Absperrschieber 11 von der Materialzuführung aus dem Vorratsbehälter 1 abgesperrt, während gemäß der Einstellung der Dosierschieber 10, 11 nach Fig.3 das Normaldosierrad 5 durch den weiteren Absperrschieber 10 von der Materialzuführung aus dem Vorratsbehälter 1 abgesperrt ist.

Einige der Dosierräder 5, 6 sind als so genannte Dosierstoppräder 18 ausgebildet. Diese Dosierstoppräder 18 können als Fahrgassenräder oder für die Abschaltung für eine Arbeitsbreitenreduzierung eingesetzt werden. Üblicherweise sind die Normaldosierräder 5 und Feindosierräder 6 über nicht dargestellte Verbindungselemente mit der Dosierwelle14 kraft- oder formschlüssig verbunden. Wenn in diese Dosierräder jedoch als so genannte Dosierstoppräder 18 zum Einsatz kommen, wird die direkte Antriebsverbindung mit der Dosierwelle 14 gelöst und/oder aufgehoben. Um dennoch diese so genannten Dosierstoppräder 14 zur Materialausbringung antreiben zu können, sind sie mit einer zusätzlichen Antriebsvorrichtung 19 verbindbar, welches im Folgenden beschrieben ist.

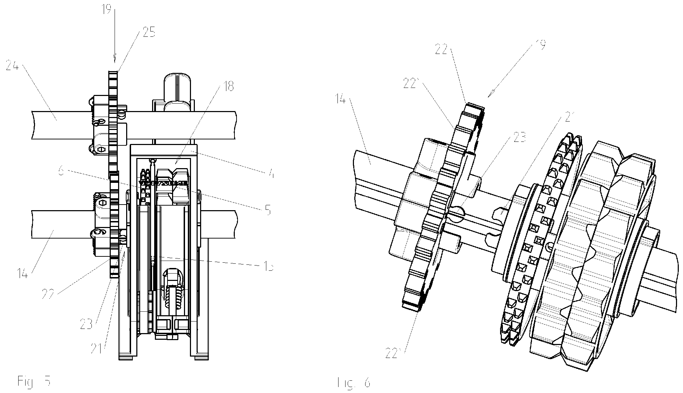

Die Normaldosierräder weisen jeweils den ringförmigen Ansatz 20 auf, der über die eigentliche Breite des Dosierbereiches des Normaldosierrades 5 hinausreicht. Auf diesen Ansatz 20 wird zunächst in form- und/oder kraftflüssiger Weise das Feindosierrad 6 ausgesetzt, damit es über das Normaldosierrad 5 zur Materialausbringung anzutreiben ist. Der an dem Normaldosierrad 5 angebrachte ringförmige Ansatz 20 ist aus dem Dosiergehäuse 4 ausgeführt, wie Fig. 5 und 6 zeigen. Die Dosierstoppräder 18 sind frei drehbar auf der Dosierwelle 14 angeordnet. An dem Ende des ringförmigen Ansatzes 20 sind im Ausführungsbeispiel klauenförmig ausgestaltete Kupplungselemente 21 angeordnet. Somit sind die Kupplungselemente 21 für die frei drehbar auf der Dosierwelle 14 angeordneten Dosierräder 18 seitlich aus dem jeweiligen Dosiergehäuse 4 herausgeführt. Selbstverständlich können auch bei den direkt mit der Antriebswelle 14 gekuppelten Dosierräder 5 Ansätze 20 vorhanden und aus dem Dosiergehäuse 4 heraus geführt sein

Auf die Dosierwelle 14 ist das in bevorzugter Weise zweiteilig ausgebildete Übertragungsstirnrad 22 angeordnet. Das Übertragungsstirnrad 22 besteht aus zwei miteinander verbindbaren Hälften 22'. Das Zahnrad 22 ist also geteilt ausgebildet und zusammenklemmbar auf der Dosierwelle 14 in festsetzbarer Weise angeordnet. Das Übertragungsstirnrad 22 weist im Ausführungsbeispiel ebenfalls Kupplungsklauen 23 auf. Diese Kupplungsklauen 23 wirken mit den Kupplungsklauen 21 des Normaldosierrades 5 des Dosierstopprades 18 in formschlüssiger Weise zusammen. Weiterhin ist der Dosiereinrichtung die angetriebene Vorgelegewelle 24 zugeordnet. Auf dieser Vorgelegewelle 24 ist das ebenfalls aus zwei Hälften, die miteinander verbindbar sind, bestehende Antriebsstirnrad 25 angeordnet. Dieses Antriebsstirnrad 25 steht mit dem Übertragungsstirnrad 22 in Antriebsverbindung. Somit ist das jeweilige einem Dosierrad 18 zugeordnete Zahnrad 21 mit einem auf einer von der Antriebseinrichtung angetriebenen Vorgelegewelle 24 angeordneten Antriebszahnrad 25 in Antriebsverbindung zu setzen. Somit sind die als Dosierstoppräder 18 ausgebildeten Dosierräder 5, 6 antreibbar. Die Vorgelegewelle 24 ist über eine nicht dargestellte schaltbare Kupplungseinrichtung mit der Antriebseinrichtung verbunden, so dass wahlweise die Vorgelegewelle 24 und somit die Dosierstoppräder 18 zur Materialausbringung angetrieben oder falls Fahrgassen angelegt werden sollen oder eine Arbeitsbreitenreduzierung erfolgen soll, von Antrieb abzukoppeln und somit still zusetzen ist.

Somit ist der seitlich aus dem Dosiergehäuse 4 herausgeführte Bereich 20 des jeweiligen Kuppelelementes 21 über Verbindungs- und/oder Antriebsübertragungselemente 22, 23, 24, 25 mit der Antriebseinrichtung kraftschlüssig verbindbar.

Die Verbindungs- und/oder Antriebsübertragungselemente für die Dosierstoppräder 18 sind somit jeweils als Zahnrad 22, 25, vorzugsweise Stirnrad ausgebildet.

## Patentansprüche

1. Sämaschine zum Ausbringen von Saatgut, Dünger und dergleichen, mit einem Vorratsbehälter, Verteil- und/oder Ausbringeinrichtungen, und einer zwischen dem Vorratsbehälter und den Verteil- und/oder Ausbringeinrichtungen angeordneter Dosiervorrichtung, die vorzugsweise mehrere nebeneinander angeordnete und in Dosiergehäusen (4) angeordnete vorzugsweise als Normal- (5) und/oder Feindosierräder (6) ausgebildete und auf einer vorzugsweise antreibbaren Dosierwelle (14) angeordnete Dosierräder (5, 6)aufweist, die das in dem Vorratsbehälter (1) befindliche Saatgut, Dünger und dergleichen in einstellbaren Mengen den Verteil- und/oder Ausbringeinrichtungen zuführen, wobei zumindest einige der Dosierräder (5, 6) als sogenannte Dosierstoppdosierräder (18) frei drehbar auf der Dosierwelle (14) angeordnet und mittels zugeordneter Kuppelelemente (21, 22, 23, 24, 25) einerseits mit einer Antriebseinrichtung verbindbar und antreibbar und andererseits von der Antriebseinrichtung abkuppel- und stillsetzbar sind, wobei die Kuppelelemente (21, 22) für die frei drehbar auf der Dosierwelle (14) angeordneten Dosierräder (18) seitlich aus dem jeweiligen Dosiergehäusen (4) herausgeführt sind, wobei der seitlich aus dem Dosiergehäuse (4) herausgeführte Bereich (22) des jeweiligen Kuppelelementes (22) über Verbindungs- und/oder Antriebsübertragungselemente (22, 23, 24, 25) mit der Antriebseinrichtung kraftschlüssig verbindbar ist, **dadurch gekennzeichnet, dass** die Verbindungs- und/oder Antriebsübertragungselemente jeweils als Zahnrad (22, 25), vorzugsweise Stirnrad ausgebildet sind und dass das Zahnrad (22) geteilt ausgebildet und zusammenklemmbar auf der Dosierwelle (14) in festsetzbarer Weise angeordnet ist.

2. Sämaschine nach Anspruch 1, **dadurch gekennzeichnet, dass** das jeweilige einem Dosierrad (18) zugeordnete Zahnrad (21) mit einem auf einer von der Antriebseinrichtung angetriebenen Vorgelegewelle (24) angeordneten Antriebszahnrad (25) in Antriebsverbindung steht.

## Claims

1. Seeder for discharging seeds, fertilizer and the like, with a storage container, distributing and/or discharging devices, and a metering apparatus which is arranged between the storage container and the distributing and/or discharging devices and preferably has a plurality of metering wheels (5, 6) which are arranged next to one another and are arranged in metering housings (4) and are preferably designed as normal metering wheels (5) and/or fine metering wheels (6) and are arranged on a preferably drivable metering shaft (14) and which supply the seeds, fertilizer and the like located in the storage container (1) in adjustable quantities to the distributing and/or discharging devices, wherein at least some of the metering wheels (5, 6) are arranged as what is referred to as metering stoppage metering wheels (18) in a freely rotatable manner on the metering shaft (14) and, by means of associated coupling elements (21, 22, 23, 24, 25), firstly can be connected to and drivable with a drive device and secondly can be decoupled from and can be shut down by the drive device, wherein the coupling elements (21, 22) for the metering wheels (18), which are arranged in a freely rotatable manner on the metering shaft (14), are guided laterally out of the respective metering houses (4), wherein that region (22) of the respective coupling element (22) which is guided laterally out of the metering housing (4) is connectable with a force-fit to the drive device via connecting and/or drive transmission elements (22, 23, 24, 25), **characterized in that** the connecting and/or drive transmission elements are in each case designed as a toothed wheel (22, 25), preferably spur gear, and **in that** the toothed wheel (22) is of divided design and is arranged so as to be able to be clamped together on the metering shaft (14) in a securable manner.

2. Seeder according to Claim 1, **characterized in that** the respective toothed wheel (21) assigned to a metering wheel (18) is connected in terms of drive to a drive toothed wheel (25) arranged on a countershaft (24) driven by the drive device.

## Revendications

1. Semoir pour épandre des semences, des engrains et similaires, comprenant un réservoir, des dispositifs de distribution et/ou d'épandage, et un dispositif de dosage disposé entre le réservoir et les dispositifs de distribution et/ou d'épandage, lequel présente de préférence plusieurs roues de dosage (5, 6) disposées les unes à côté des autres et disposées dans des boîtiers de dosage (4), de préférence réalisées en tant que roues de dosage normal (5) et/ou de dosage fin (6) et disposées sur un arbre de dosage (14) de préférence pouvant être entraîné, lesquelles acheminent les semences, les engrais et similaires se trouvant dans le réservoir (1) par quantités ajustables aux dispositifs de distribution et/ou d'épandage, au moins certaines des roues de dosage (5, 6) étant disposées en tant que roues de dosage dites d'arrêt de dosage (18) de manière librement rotative sur l'arbre de dosage (14) et pouvant être connectées et entraînées au moyen d'éléments d'accouplement associés (21, 22, 23, 24, 25) d'une part à un dispositif d'entraînement et pouvant d'autre part être désaccouplées du dispositif d'entraînement et immobilisées, les éléments d'accouplement (21, 22) pour les roues de dosage (18) disposées de manière librement rotative sur l'arbre de dosage (14) étant guidés latéralement hors des boîtiers de dosage respectifs (4), la région (22) guidée latéralement hors du boîtier de dosage (4) de l'élément d'accouplement respectif (22) pouvant être connectée par engagement par force au dispositif d'entraînement par le biais d'éléments de connexion et/ou de transfert de l'entraînement (22, 23, 24, 25), **caractérisé en ce que** les éléments de connexion et/ou de transfert de l'entraînement sont à chaque fois réalisés sous forme de roue dentée (22, 25), de préférence de pignon droit, et **en ce que** la roue dentée (22) est réalisée sous forme divisée et est disposée de manière à pouvoir être serrée de manière à pouvoir être fixée sur l'arbre de dosage (14).

2. Semoir selon la revendication 1, **caractérisé en ce que** la roue dentée (21) respective associée à une roue de dosage (18) est en liaison d'entraînement avec une roue dentée d'entraînement (25) disposée sur un arbre secondaire (24) entraîné par le dispositif d'entraînement.
